(19)

Europäisches
Patentamt
European
Patent Office
Office européen
des brevets

(11) **EP 2 983 123 A1**

(12) **EUROPEAN PATENT APPLICATION**

(43) Date of publication:
**10.02.2016 Bulletin 2016/06**

(51) Int Cl.:
*G06Q 30/02* [(2012.01)] *G06Q 30/00* [(2012.01)]

(21) Application number: **15179606.7**

(22) Date of filing: **04.08.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **17.07.2014 IL 23369614**

(71) Applicant: **Deutsche Telekom AG
53113 Bonn (DE)**

(72) Inventors:
• **Grolman, Edita
Beer Sheva (IL)**

• **Iny, Yoni
Givataim (IL)**
• **Bar, Ariel
Ashdod (IL)**
• **Shapira, Bracha
Beer Sheva (IL)**
• **Rokach, Lior
Omer (IL)**
• **Dayan, Aviram
Omer (IL)**

(74) Representative: **Maiwald Patentanwalts GmbH
Elisenhof
Elisenstrasse 3
80335 München (DE)**

(54) **SELF TRANSFER LEARNING RECOMMENDATION METHOD AND SYSTEM**

(57)     A computer implemented method for recommending an item to a user in big data systems, according to which a binary matrix of ratings of items is generated by users for a full target domain and sub-matrixes with high correlation between the users, items and their ratings are discovered in the binary matrix. The density of the sub-matrixes in the binary matrix is calculated and a source domain matrix is populated according to the results, based on the density calculated in the discovered sub-matrixes. Then top-N matrixes with highest densities are selected. Codebooks, which contains different user-item rating patterns, are constructed for each of the selected sub-matrixes, which are sub-domains and constructing a codebook for the matrix with the full rating dataset. Finally the captured different user-item rating patterns are projected to the full domain dataset, based on the constructed codebooks.

EP 2 983 123 A1

**Description**

**Field of the Invention**

The present invention relates to the field of recommender systems. More particularly, the invention relates to a self-transfer learning method for recommender systems which is based on data from a single domain.

**Background of the Invention**

The use of different portals for consuming content in a variety of fields is a standard in the modern life. Almost everybody have an account through which he acquire content such as music, movies, books etc. in most portals there is usually a recommendation system which can recommend to the user on similar things according to the features of the items that are chosen. However, most of the recommendation systems today are naive recommendation system which can recommend to a person only if there is enough information about the user taste and only according to mutual users or items. For example, if a user choses to hear rock music, the recommendation system recommends on other songs which are also rock music and usually with some similar features according to the content of the music. Another aspect is that if two different users are consuming many things in mutual the system recognizes that they have similar taste and therefore the system probably recommends on some item that one user has chosen to the second user. But, in case where a user wants to receive recommendations on a totally new field which he never touched before, the recommendation system is incapable to provide recommendations.

The basic machine learning technique that the method of the present invention is based on is transfer learning (TL). TL, which is a recently developed machine learning method intended to extract knowledge learned from one task in a domain and used for a target task in a different domain, is needed when required to rebuild statistical models following changes in the distribution of data, for example if the data becomes outdated, or for newly-built systems that suffer from a lack of sufficient information.

An example of an algorithm based on the TL method is the CBT disclosed by Li et al "Can Movies and Books Collaborate? Cross-domain Collaborative Filtering for Sparsity Reduction", In Proceedings of the 21st International Joint Conference on Artificial Intelligence, July, 2009, pp. 2052-2057, Morgan Kaufmann Publishers Inc. Assuming that the domains are equally related, Li et al suggests to alleviate the sparsity problem by using user-item rating patterns found for the source domain (the dense rating matrix) and transfer them to the target domain (the sparse rating matrix).

In order to transfer the knowledge, a bridge is established at the cluster level of user-item rating patterns. The algorithm of Li et al is built in the following way: first, a codebook is constructed. The codebook summarizes the original rating data, i.e. it summarizes the data of the source domain. The constructed codebook indicates the rating that a user belonging to a specific user cluster will give to an item that belongs to the specific item cluster. The codebook is then constructed by simultaneously clustering the users and the items of the source matrix. The second step of the algorithm is to model each target user and target item to one of the clusters respectively in the source domain.

However, if the users in the two domains behave differently, or if the domains are not significantly related, this may lead to a condition called Negative Transfer, which may result with a negative effect on the model and a decrease in the target model accuracy.

On the other hand, a TL method is subject to overfitting during attempts to avoid the Negative Transfer condition.

It is an object of the present invention to provide a self-transfer learning method for recommender systems that relies on the target domain information.

It is an object of the present invention to provide a transfer learning method for recommender systems that is scalable and intended for big data systems.

Other objects and advantages of the invention will become apparent as the description proceeds.

**Summary of the Invention**

The present invention is directed to a computer implemented method for recommending an item to a user in big data systems, which comprises the following steps:

> a) generating a binary matrix of ratings of items by users for a full target domain;
> b) discovering in the binary matrix sub-matrixes with high correlation between the users, items and their ratings and calculating the density of the sub-matrixes in the binary matrix;
> c) populating a source domain matrix according to the results based on the density calculated in the discovered sub-matrixes and selecting top-N matrixes with highest densities;
> d) constructing codebooks, which contains different user-item rating patterns, for each of the selected sub-matrixes, which are sub-domains and constructing a codebook for the matrix with the full rating dataset; and

e) projecting the captured different user-item rating patterns to the full domain dataset, based on the constructed codebooks.

The discovering in the binary matrix of sub-matrixes with high correlation between the users, items and their ratings and calculating the density of the sub-matrixes in the matrix, is iterative and comprises the steps of

    a. discovering a user cluster and updating the codebook accordingly;
    b. discovering an item cluster and updating the codebook accordingly;
    c. evaluating the accuracy measured on the validation set;
    d. applying a termination condition;
    e. returning a generated model from the iteration with minimum RMSE.

The codebook construction may comprise the following steps:

    a. initializing the codebook construction by setting a random cluster index for each user and item; and
    b. calculating the codebook values.

The codebook values may be calculated by:

    c. generating dense sub-matrices, by the following equation:

$$B_{i,j} = \frac{|ST/U_{uid}=i \wedge V_{iid}=j|}{|ST/U_{uid}=i| * |ST/V_{iid}=j|}$$

wherein $B_{i,j}$ is the codebook of a source sub domain for a user cluster and an item cluster, ST is the training set, $U_{uid}$ is the cluster index of a user Id and $V_{iid}$ is the cluster index of an item Id;
    d. generating rating patterns by the following equation:

$$B_{i,j} = \frac{\sum_{ST/U_{uid}=i \wedge V_{iid}=j} ST_{uid,iid}}{|ST/U_{uid}=i \wedge V_{iid}=j|}$$

wherein $B_{i,j}$ is the codebook of a source sub domain for a user cluster and an item cluster, ST is the training set, $U_{uid}$ is the cluster index of a user Id and $V_{iid}$ is the cluster index of an item Id;
    e. co-clustering and discovering patterns, by an iterative calculation, comprising the steps of:

        i. discovering a user cluster, finding the optimal user cluster and minimizing the total error between the user's ratings and a predicted ratings and updating the codebook;
        ii. discovering item cluster, finding the optimal item cluster-index, minimizing the total error between the item's ratings and the predicted ratings and updating the codebook;
        iii. evaluating the accuracy of the current model;
        iv. stopping according to a stop condition; and
        v. returning the generated model from the iteration with minimum RMS Error.

The stop condition of the co-clustering and discovering patterns, by an iterative calculation may be either after predefined number T iterations or after iteration with no significant improvement to the RMS Error compared to the previous one.
The step of populating a source domain matrix, may further comprise creating a combination of users- items cluster pairs to make an aggregated source domains that have more data than the sub-matrices while maintaining high density, instead of selecting the sun-matrixes with top-N highest densities.
The codebook construction may be initialized by an initial mapping of the users and items from the target domain to the source clusters, instead of the step of setting a random cluster index for each user and item.

Brief Description of the Drawings

In the drawings:

- Fig. 1 schematically shows a method for recommending an item to a user, according to one embodiment of the present invention;
- Fig. 2 is a schematic illustration of an example of the method of the present invention, according to one embodiment of the invention;
- Fig. 3 is an example for a code implementation of the codebook construction according to an embodiment of the invention;
- Fig. 4 is an example for a code implementation of the codebook transfer algorithm according to an embodiment of the invention;
- Fig. 5 schematically shows the final RMSE results of an experiment which compares the method of the invention with prior art methods; and
- Fig. 6 schematically shows the results of the comparison of a single codebook model to multiple codebook models in VL according to an embodiment of the invention.

Detailed **Description of Preferred Embodiments**

The present invention relates to a self-transfer learning recommender system based on the target domain.

In the present invention, dense subsets of the original target domain are utilized as "source" domains for transfer learning. The rationale behind this idea is that a dense subset contains users and items which have many ratings thus can be considered as the most influencing users, and the popular items form a good representation of the latent features and preferences of the whole domain.

The present invention has the advantages of a compact representation of data-structures; (removal of the highly sparse indicator based matrix W); avoiding unnecessary and costly linear-algebra matrix operations; and a maximum level of distribution as all user/item cluster discovery are performed in parallel.

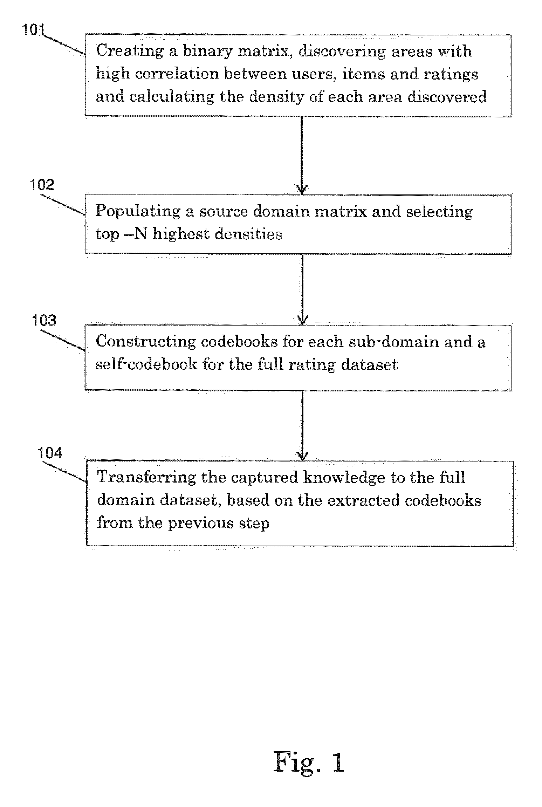

Fig. 1 schematically shows the steps of the method of the present invention as follows:

1. The first step 101 is to create a binary "rated" matrix that has a "1" value for every user/item pair that has a rating and "0" otherwise. In the binary matrix, meaningful sub-areas are discovered in the source domain which is the target domain, which employs high degree of correlation between the users, items and their ratings within these. Then codebooks are generated based on these binary values. In the implementation of the present invention the resulting codebook values correspond to the density for each of the user item cluster. For each discovered area the density is calculated.

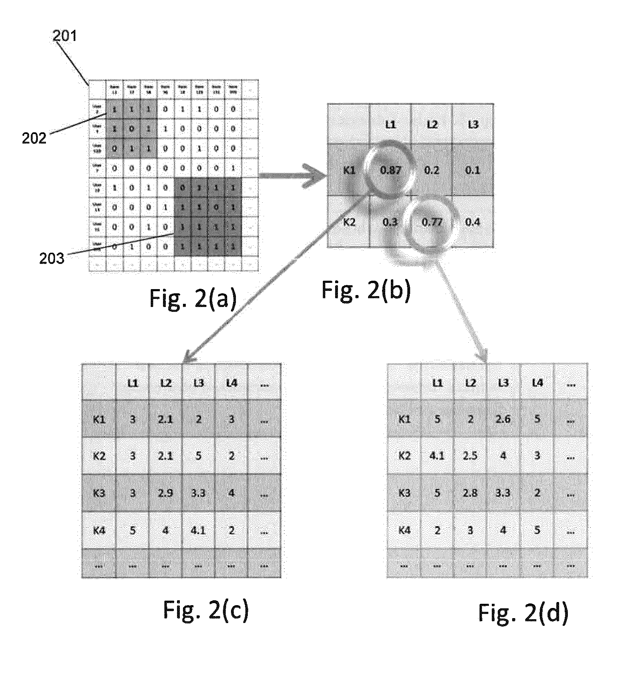

2. The next step 102, is to populate the source domains matrix according to the results in the previous step based on the density levels that were discovered in the previous step. This is done by creating the source sub domains. The first sub-domain is the entire target domain. N additional sub domains are created using the method of top-N which selects the top N number of discovering densest sub-matrices, which represent sub-domains. (In the example shown on Figs. 2(a) - 2(d), selecting the top 2 discovered densest sub-matrices).

3. Step 103 constructs codebooks from each of the sub-domains. The codebooks represent different user-item rating patterns. Each value in the codebook captures the latent factor rating pattern between the user and item clusters in the context of the given sub domain. In addition to these codebooks, self-codebook is extracted based on the full ratings dataset.

4. In the fourth step 104, the captured knowledge about the different user-item rating patterns is transferred to the full domain dataset based on codebooks from previous step 103 by applying an iterative process of codebook transfer learning from the sub domains to the target domain.

Figs 2(a)-2(d) shows an example of the cookbook construction part in the method of the present invention according to an embodiment of the invention. In particular steps 101-103 are presented. In Fig. 2(a) the binary co-clustering matrix 201 is illustrated. In this example two created user-item clusters with high density level are shown, cluster 202 and cluster 203. As can be seen, the first cluster 202 contains 3 users and 3 items while the second cluster 203 contains 4 of each. In Fig. 2(b) the density level of each user-item cluster is calculated and the top two densest clusters are selected (0.87 for cluster 203 and 0.77 for cluster 202). Typically, the sub domain selection matrix is a KxL matrix with typical values of 20x20, however, for illustration the sub domain selection matrix in Fig. 2(b) is 2x3. Lastly Fig. 2(c) and 2(d) show the resulting codebook generated from the users, items and actual ratings in each of the previous mentioned sub-domains.

The prediction rule of the final model is presented in equation 1. It is a linear combination of N sub domain codebooks - one for each source sub domain. $B_n$, the codebook of source sub domain n, is a two dimensional matrix, as B[user_cluster][item_cluster] captures the latent factor rating pattern between the user and item clusters in the context of the given sub domain. U maps each user in the target domain to a vector of N cluster indices corresponding to B ($U_{uid,n}$ denotes the cluster index of a uid (user id) in codebook n), while V is an equivalent map in the context of items; $\alpha$ is an n-sized vector specifying the global relatedness of each source sub domain to the target domain. Each of these components is learned by the algorithms described in the following paragraphs.

$$(1) \qquad p(uid, iid) = \sum_{n=1}^{N} \alpha_n B_n [U_{uid,n}][V_{iid,n}]$$

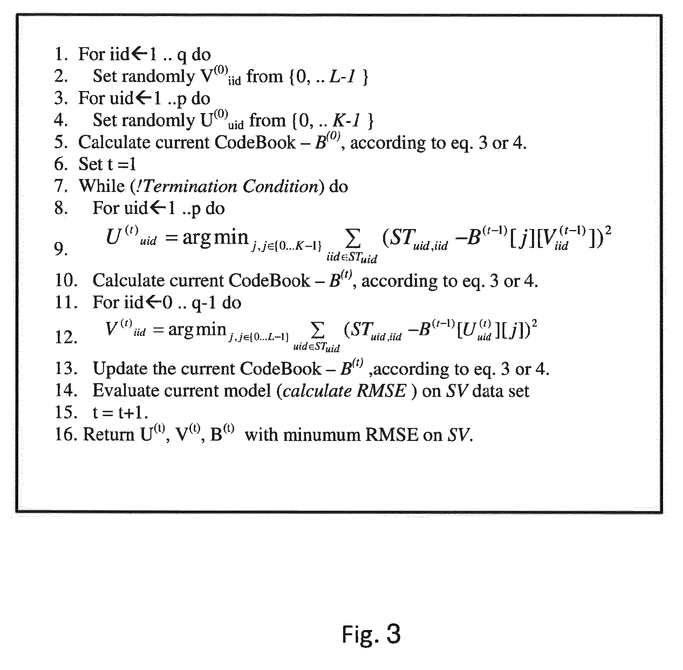

The algorithm presented in Fig 3 uses a co-clustering approach to group similar users and items together and generates a codebook. Two variants are used of this algorithm to accomplish two different tasks: First, this algorithm is applied to discover a set of dense sub-matrices in the target domain (relevant to step 101 in Fig. 1). Second, the algorithm is applied to generate a codebook for each of the discovered sub-matrices, capturing the latent factor ratings patterns, later to be expanded as presented in equation 1 (relevant to step 103 in Fig. 1).

The algorithm takes as input a dataset of ratings, as each record contains a user-id (ranges from 1 to p), item-id (ranges from 1 to q) and a rating value. These records are divided into training (ST) and validation (SV) sets. For the task of creating a binary matrix to perform step 101, the rating is fixed to be "1", indicating that there is a certain interaction between this user and the item. For the task of the codebooks construction the rating is actually the rating that users gave to the item. The algorithm's iterative process clusters similar users and items together. The algorithm associates each user with one of K possible clusters and each item with one of L possible clusters (K and L are controlled parameters of the algorithm). In addition the algorithm generates a codebook - a matrix specifying how users from a certain user-cluster will react to an item in a certain item-cluster. The outputs of the algorithm are U - a vector specifying to which user-cluster each user belongs; and V - a symmetric vector, mapping each item to its item-cluster. The method of the invention assumes "hard clustering", meaning that each user/item belongs to exactly one cluster. B is the codebook, which is a KxL matrix capturing the interaction between the user-item clusters. The algorithm is set to solve the optimization problem presented in equation 2, which aims to minimize the squared error between the actual ratings in ST and the predicted ones according to the codebook values.

$$(2) \qquad \min_{U,V,B} \sum_{ST} (ST_{uid,iid} - B[U_{uid}][V_{iid}])^2$$

Fig. 3 schematically shows a code implementing the method of the construction of the codebook according to an embodiment of the invention. In lines 1-5, a random cluster index is set for each user and item in ST. In addition the initial codebook is calculated. Calculating the codebook value requires a different calculation for each task as follows: For the first task, generating dense sub-matrices, equation 3 is applied, while for the second task of generating rating patterns, equation 4 is applied. Next, an iterative process of co-clustering and pattern discovering is started (lines 6-15). Each of the iterations consists of three parts:

  1. User cluster discovery: according to the current V and B values, the optimal cluster-index for each user is found (lines 8-9), minimizing the total error between the user's ratings and the predicted ones using the other current model variables. After discovering the new cluster assignment for all users, the codebook is updated (line 11).
  2. Item cluster discovery - symmetric to the previous phase (lines 11-13), but from the items' perspective. according to the current V and B values, the optimal cluster-index for each item is found, minimizing the total error between the item's ratings and the predicted ones using the other current model variables. After discovering the new cluster assignment for all items, the codebook is updated.
  3. Evaluation - the accuracy, measured on the validation set - SV (line 14) of the current model is evaluated. This phase is applied in order to avoid overfitting of the codebooks on ST.

The termination condition is either after predefined number T iterations, or an iteration with no significant improvement to the RMSE (RMS Error) compared to the previous one (improvement which is less than a threshold value $\varepsilon$, or no improvement at all). Lastly, the algorithm returns the generated model from the iteration with minimum RMSE (line 16). Each step of the algorithm is designed to decrease the total error presented in equation 2, resulting in convergence to a local minimum on the training dataset.

Equation 3 is applied for finding dense sub- matrices in ST (relevant to step 101 in Fig. 1):

$$(3) \qquad B_{i,j} = \frac{|ST/U_{uid}=i \wedge V_{iid}=j|}{|ST/U_{uid}=i| * |ST/V_{iid}=j|}$$

The number of observed ratings in ST associated with the user-item pairs corresponding to cluster indices (i,j), divided by the total size of the pairwise-cluster (number of users belonging to cluster i multiplied by the number of items belonging to cluster j).

Equation 4 is applied for discovering latent factor rating patterns in ST (relevant to step 103 in Fig. 1):

$$(4) \qquad B_{i,j} = \frac{\sum_{ST/U_{uid}=i \wedge V_{iid}=j} ST_{uid,iid}}{|ST/U_{uid}=i \wedge V_{iid}=j|}$$

Each element Bij in the matrix is set to the average rating of all the relevant samples in ST (the average of all user-item pairs, where the user-cluster index is set to i, and item-cluster index is set to j).

After applying the CodeBook Construction Algorithm according to equation 3 at the initial step, the new sub domains are created (selecting the top-N user/items clusters that are the densest). Next the CodeBook Construction Algorithm according to equation 4, is applied as described earlier.

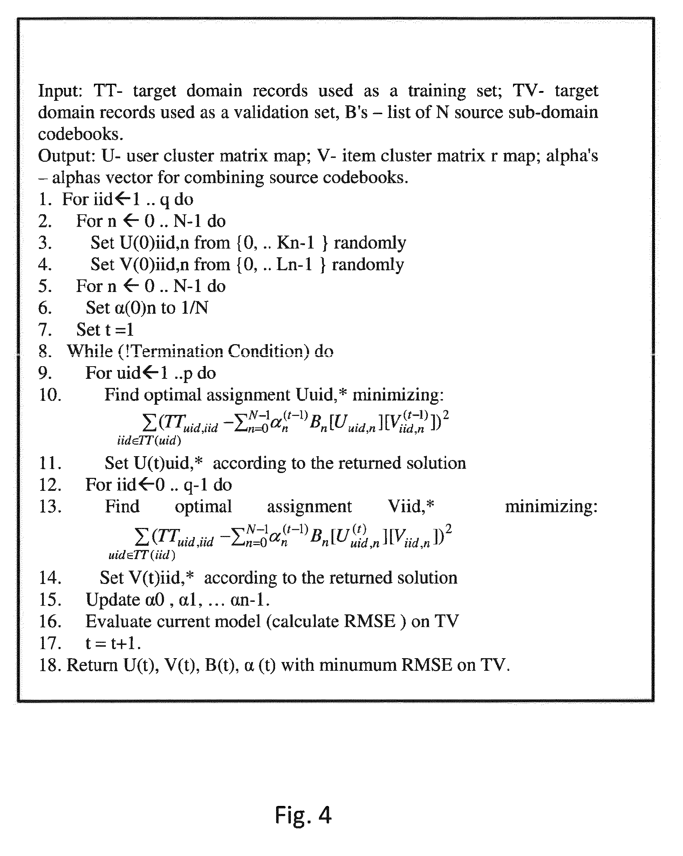

In Fig. 4 the core learning algorithm in the method of the invention is presented (step 104 in Fig. 1). Based on the codebooks generated from multiple sub domains, a model that predicts the ratings on the target domain is generated. For each user and item in the target domain, the most relevant clusters are associated in each sub domain codebook; in addition the algorithm determines the global relevance of each sub domain to the target domain. The inputs of the algorithm are the TT which is the training dataset and TV which is the validation datasets, both datasets from the target domain, and N sub-domain codebooks. The outputs of the algorithm are the U and V matrices mapping for each user and item in the target domain, the relevant clusters in each of the sub-domains codebooks, and global alphas vector indicating how to aggregate the sub domain codebooks together. A compact representation for U and V is used in the method of the present invention: for each user/item the associated vector in U/V contains the cluster indices directly for each of the N source codebooks. This compact representation reduces space complexity, and enables to predict the rating that a user - uid, gives to an item - iid, directly, without using costly matrix multiplications. The prediction rule is presented in equation 1. Notice that it is simply needed to look at each source domain codebook's relevant matrix indices and summarize the results according to the relevant alphas. In order to find U, V and the relevant alphas an optimization problem which aims to minimize the squared error of the model was defined, as presented in equation 5.

$$(5) \qquad \min_{U,V,\alpha} \sum_{TT} (TT_{uid,iid} - \sum_{n=1}^{N} \alpha_n B_n [U_{uid,n}][V_{iid,n}])^2$$

Fig. 4 shows a code implementation for the method that was used to solve the optimization problem. At first randomly clusters are assigned for each item in V (lines 1-3) and all alphas equally to 1/N (lines 4-5) are initialized. In order to find the best model's parameters the rating dataset TT is iterated several times, until reaching a termination condition (lines 6-7). Each of the iterations consists of four phases:

1. Iterating through all users and adjusting their cluster indices (U), minimizing the total squared error between the real ratings and the predicted ones according to the other parameters of the current model, i.e.: selecting the best cluster index in each source sub-domain codebook from all possible combination (lines 8-10).
2. Iterating through all items, and adjusting their cluster indices (V) in a similar way (lines 11-13).
3. Updating alphas by solving a set of N linear equations (lines 15-16). The method used to perform this is same method presented at: Moreno, O., Shapira, B., Rokach, L., & Shani, G. (2012, October). TALMUD: transfer learning for multiple domains. In Proceedings of the 21st ACM international conference on Information and knowledge management (pp. 425-434). ACM.
4. Evaluating the current model on the validation set TV (line 16) in order to avoid overfitting.

The termination condition (line 7) is either after a predefined number T of iterations, or after an iteration with no significant improvement to the RMSE compared to the previous one (improvement which is less than a threshold value ε, or no improvement at all). Finally the model with minimum RSME on TV is returned (line 17).

Similar to the codebook construction algorithm, each step of the algorithm is designed to decrease the total error presented in equation 5, resulting a convergence to a local minimum on the training dataset.

Experiment 1

For the experiments proprietary datasets obtained from three popular media sites in three domains have been used: Music Loads1 (MLDE), Video Loads2 (VL) and Games Load3 (GL) The three propriety datasets containing anonymized event based data about user's activities on the systems' items. Events include for example buying item, click on item, add to cart, etc. For each user-item pair the set of associated events is translated into a rating score, by assigning a weight for each event type, summarizing the relevant data and normalizing it into a 1-5 rating scale.

[1] http://www.musicload.de/
[2] http://www.videoload.de/
[3] http://www.gamesload.de/

All of the data sets are extremely sparse. Specifically, The MLDE (music) dataset contains approximately 8M rating performed by 11M users on 9M different items - the sparsity level is almost 100% (more than 99.99999%). The VL (video) dataset contains approximately 19M rating performed by 495K users on 1M different items - sparsity level of more than 99.998% while the GL (games) dataset contains approximately 651K rating performed by 1M users on 3299 different items - sparsity level more than 99.981%

All three dataset's records were divided into training and testing datasets. The training data consisted of 80% of the ratings, selected by random splits over the users' record profiles. The test dataset consisted of the remaining 20%. Since the Codebook contraction and transfer algorithms rely on validation sets, each of the training sets was splited into "real" training (ST/TT) and validation (SV/TV) sets with an 80:20 ratio (real training 80%). This additional split to training and validation is in order to avoid overfitting issues.

The goal of these experiments is to evaluate the effect of transferring knowledge from the domain itself compared to basic CF method, specifically looking at assessing where self-domain experiments improve accuracy results. In this experiment a state of the art item-to-item CF approach is applied for Big Data as implemented by Mahout [9], using the Pearson correlation coefficient as the similarity measure. The results of this model are considered as a baseline for the evaluation of the present invention. A k-NN method was selected for evaluation since Mahout supports these algorithms in a distributed configuration for handling Big Data. Though, Matrix Factorization methods are also implemented in Mahout, these methods are not implemented in distributed and scalable form.

The first source domain is the target domain itself - this hearkens back to the original concept of collaborative filtering. Since the invention is based on the fact that multiple source domains can be used effectively, there is no reason to eliminate the data that is most correlated with the target domain, which is the target domain itself. For building the other source domains it was initially used the top-2 obtained most dense sub matrices as two distinct source domains; this is referred to as top-N technique for choosing the source domains. The number of source domains is determined by a cross validation process during calibration. In the experiments of the present invention N is set to 2.

The size of the user and item clusters (K and L) were set to 20. Stopping criteria parameters of the learning algorithm were empirically set to T = 10 (maximum iteration per single run) and ε = 0.0001 (minimum required improvement in the RMSE on the validation set per iteration).

The measures that were used are the RMSE and precision and recall RMSE, which measures the deviation of the predicted ratings from the actual ones. In order to measure precision and recall first a top N recommendations was generated. Top N recommendations were generated using random sampling of N*2 items which do not appear in the user's training profile; calculating the expected rating of each of the sampled items according to the model, and finally returning the N items with the highest predicted scores. In the experiments of the present invention, N was set to 1000. The precision is measured based on the test set profile of the user, the number of hits (generated recommendations which appear in the user's test set profile) divided by N. The recall is measured as the number of hits divided by the user-profile size.

In the table 1 are presented the results for the model of the present invention (STARS) as follows:

Table 1. STARS Results

|  |  | RMSE | Precision | Recall |
|---|---|---|---|---|
| MLDE | Basic CF | 0.7658 | 2.84E-06 | 8.68E-04 |
|  | STARS | 0.6728 | 3.11E-06 | 9.51E-04 |
| VL | Basic CF | 0.7415 | 1.42E-05 | 1.475E-03 |
|  | STARS | 0.6296 | 1.43E-05 | 1.477E-03 |

(continued)

|  | | RMSE | Precision | Recall |
|---|---|---|---|---|
| GL | Basic CF | 0.9021 | 1.47E-04 | 0.3291 |
| | STARS | 0.8635 | 1.91E-04 | 0.4275 |

Observing the RMSE results as presented in Table 1, it turns out that in-domain self-transfer learning noticeably outperforms traditional CF for all tested domains. As it can be observed the minimum improvement was ~5% in GL, while the most improved domain was VL with a factor of 15%. Considering Precision and Recall, it can be observed a noticeable improvement in these metrics in most of the domains (up to 30%). Notice that the absolute values in MLDE and VL are considered small since the items catalog size is extremely large (millions of items).

These results indicate that self-transfer learning can be applied as a base line CF algorithm, which employs a light-weight variant of orthogonal non-negative matrix tri-factorization in order to extract latent features. Using traditional CF methods in extremely sparse data may lead to situation where the system does not have sufficient available ratings for accurate predictions and one possible and dare to say efficient solution is using self-transfer learning as shown in the present invention.

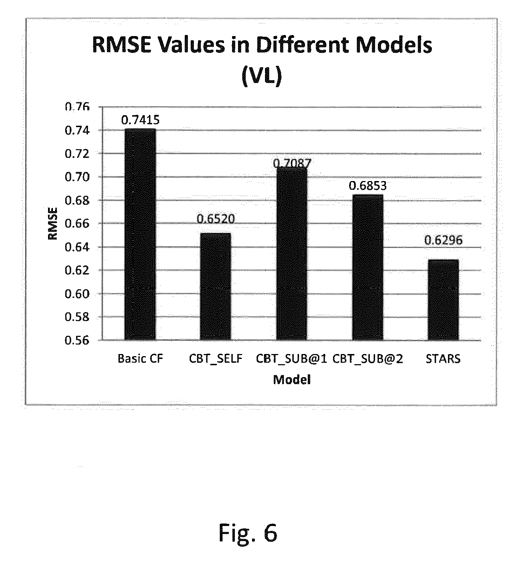

In addition, it can be noticed that using in-domains transfer learning approach which utilizes multiple codebooks has proven to outperform models containing a single codebook. This is well demonstrated in Fig. 6 which shows the RMSE values of different models in VL, comparing the following models:

a. Basic CF - The regular CF system that does not employ transfer learning;
b. CBT_SELF - Transfers knowledge using the CBT method, based on the entire target domain as a single source domain;
c. CBT_SUB@1 - Transfers knowledge using the CBT method, based on the densest discovered sub-domain by the top-N approach as described in previous section;
d. CBT_SUB@2 - same as the previous model, but with the second densest sub-domain; and
e. STARS - The final model combining all three sub- domains (CBT_SELF+CBT_SUB@1+CBT_SUB@2).

As it can be observed applying multiple STRAS model can yield additional improvement over single models.

In another embodiment of the invention, two enhancements were applied to the model of the present invention (STARS). The first enhancement relates to process of constructing sub-domains. The second enhancement affects the initial mapping of the users and items from the target domain to the source clusters.

The first enhancement aims at affecting the construction of the sub-domains. Instead of making the obvious choice of taking the densest sub domain and declare it as the source domains, a different combinations of clusters is created using sophisticated methods to create the source dense sub-matrices. User item cluster pairs are combined to create aggregated source domains that have more data than the original sub-matrices, while attempting to maintain high density. This technique is referred to as the Pairwise Selector. Following is an explanation of the method for calculating the density of each pair of clusters, and selecting the densest cluster pairs.

In Pairwise Selector after applying the Code Book Construction Algorithm according to equation 3 at the initial step, the new sub-domains need to be created. The Pairwise Selector calculates the density of each pair of clusters, and selects the densest cluster pairs in order to populate the new sub domains. The density of the pairs is calculated according to equation 6. Using the following notations:

A- First CodeBook user i item j cluster
B - Second CodeBook user i item j cluster
$|R_{(i,j)}|$ - Total number of ratings in CodeBook user i item j cluster
$|U_i|$ - Total number of users in user cluster i
$|I_j|$ - Total number of items in item cluster j

$$(6) \quad Density(A_{i,j}, B_{i,j}) = \frac{\sum_{C=(A,B)} \sum_{D=(A,B)} |R_{C,D}|}{(|U_{Ai}| + |U_{Bi}| - |U_{Ai} \cap U_{Bi}|) \times (|I_{Aj}| + |I_{Bj}| - |I_{Aj} \cap I_{Bj}|)}$$

Calculating the merged clusters density requires subtracting the cutting from the union between the users and items in order to exclude overlapping users or items between the clusters. As trying to calculate the total number of users in the new pair, if these users are overlapping between the clusters - no need to count them twice. In order to calculate the cluster size all ratings combinations between A and B are merged.

In the second enhancement an initial mapping of the users and items from the target domain to the source clusters is introduce instead of initializing it randomly as presented in the embodiment of the invention presented on Fig 3, lines 3-4. This technique is referred to as smart clustering assignment activation. This is possible since, although the common use of transfer learning is that the source and target domains do not share common users and items, here it can be used the overlapping entity's. When using a subset as a source domain each "power user" and each "popular item" can be mapped to the cluster it was mapped to as an entity in the source domain, instead of randomly.

It is believed by the inventors that this improves the end result since the concept behind transfer learning is that while the users and items are dissimilar, the underlying latent features are similar between the source and target domains. A major difficulty, given unlabeled source latent features, is mapping these features to the latent features in the target domain. Even if the mapping is 1:1, it is very difficult to discover the correct mapping. Since a solid starting point for several users and items already exists, this knowledge can be used to seed the search for a latent feature mapping, thus increasing the ability to create a correct mapping from source feature to target feature. Smart Clustering Assignment Activation refers to changing lines 3 and 4 in the Code Book Transfer Algorithm as presented in Fig 3 to be set according to this policy.

To summarize the enhancements section, STARS++ model should choose the best result from the following models:

> STARS with smart clustering assignment activation.
> STARS based Pairwise Selector.
> STARS based Pairwise Selector and smart clustering assignment activation.

Observing at the Recall and the Precision results as presented in Table 2 and Table 3 respectively, it can be seen that in general, in domain has definitely a gain over Basic CF methods. In domain transfer learning using the model of the present invention (STARS) has provided a noticeable improvement as shown in the previous sections, whereas using the enhanced model according to another embodiment of the invention (STARS++ model) can even boost these results furthermore to 34% improvement level.

**Table 2. Final Recall Results**

|          | MLDE     | VL       | GL     |
|----------|----------|----------|--------|
| Basic CF | 8.68E-04 | 1.48E-03 | 0.3291 |
| STARS    | 9.51E-04 | 1.48E-03 | 0.4275 |
| STARS ++ | 9.51E-04 | 1.63E-03 | 0.4383 |

**Table 3. Final Precision Results**

|          | MLDE     | VL       | GL       |
|----------|----------|----------|----------|
| Basic CF | 2.84E-06 | 1.42E-05 | 1.47E-04 |
| STARS    | 3.11E-06 | 1.43E-05 | 1.91E-04 |
| STARS ++ | 3.11E-06 | 1.57E-05 | 1.95E-04 |

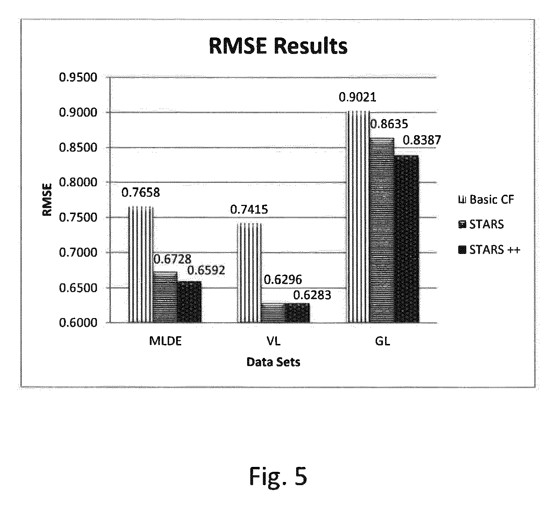

As observed from Fig. 5 that presents a comparison of RMSE for STARS++ vs. STARS and basic CF, the model of STARS++ clearly improves results for all domains.

While some embodiments of the invention have been described by way of illustration, it will be apparent that the invention can be carried out with many modifications, variations and adaptations, and with the use of numerous equivalents or alternative solutions that are within the scope of persons skilled in the art, without exceeding the scope of the claims.

**Claims**

1.  A computer implemented method for recommending an item to a user in big data systems, comprising the steps of:

> a) generating a binary matrix of ratings of items by users for a full target domain;
> b) discovering in said binary matrix sub-matrixes with high correlation between said users, items and their ratings and calculating the density of said sub-matrixes in said binary matrix;

c) populating a source domain matrix according to the results based on said density calculated in said discovered sub-matrixes and selecting top-N matrixes with highest densities;

d) constructing codebooks, which contains different user-item rating patterns, for each of said selected sub-matrixes, which are sub-domains and constructing a codebook for said matrix with the full rating dataset; and

e) projecting said captured different user-item rating patterns to said full domain dataset, based on said constructed codebooks.

2. A method according to claim 1, wherein the discovering in said binary matrix of sub-matrixes with high correlation between said users, items and their ratings and calculating the density of said sub-matrixes in said matrix, is iterative and comprises the steps of

a. discovering a user cluster and updating the codebook accordingly;

f. discovering an item cluster and updating the codebook accordingly;

g. evaluating the accuracy measured on the validation set;

h. applying a termination condition; and

i. returning a generated model from the iteration with minimum RMSE.

3. A method according to claim 1, wherein the codebook construction comprises the following steps:

a. initializing said codebook construction by setting a random cluster index for each user and item; and

b. calculating the codebook values.

4. A method according to claim 3, wherein calculating the codebook values comprises the steps of:

c. generating dense sub-matrices, by the following equation:

$$B_{i,j} = \frac{|ST / U_{uid}=i \wedge V_{iid}=j|}{|ST / U_{uid}=i| * |ST / V_{iid}=j|}$$

wherein $B_{i,j}$ is the codebook of a source sub domain for a user cluster and an item cluster, ST is the training set, $U_{uid}$ is the cluster index of a user Id and $V_{iid}$ is the cluster index of an item Id;

d. generating rating patterns by the following equation:

$$B_{i,j} = \frac{\sum\limits_{ST / U_{uid}=i \wedge V_{iid}=j} ST_{uid,iid}}{|ST / U_{uid}=i \wedge V_{iid}=j|}$$

wherein $B_{i,j}$ is the codebook of a source sub domain for a user cluster and an item cluster, ST is the training set, $U_{uid}$ is the cluster index of a user Id and $V_{iid}$ is the cluster index of an item Id;

e. co-clustering and discovering patterns, by an iterative calculation, comprising the steps of

i. discovering a user cluster, finding the optimal user cluster and minimizing the total error between the user's ratings and a predicted ratings and updating the codebook;

ii. discovering item cluster, finding the optimal item cluster-index, minimizing the total error between the item's ratings and the predicted ratings and updating the codebook;

iii. evaluating the accuracy of the current model;

iv. stopping according to a stop condition; and

v. returning the generated model from the iteration with minimum RMS Error.

5. A method according to claim 4, wherein the stop condition of the co-clustering and discovering patterns, by an iterative calculation is either after predefined number T iterations or after iteration with no significant improvement to the RMS Error compared to the previous one.

**6.** A method according to claim 1, wherein the step of populating a source domain matrix, further comprising the step of creating a combination of users- items cluster pairs to make an aggregated source domains that have more data than said sub-matrices while maintaining high density, instead of selecting said sun-matrixes with top-N highest densities.

**7.** A method according to claim 3, further comprising the step of initializing said codebook construction by an initial mapping of the users and items from the target domain to the source clusters, instead of the step of setting a random cluster index for each user and item.

101 Creating a binary matrix, discovering areas with high correlation between users, items and ratings and calculating the density of each area discovered

102 Populating a source domain matrix and selecting top −N highest densities

103 Constructing codebooks for each sub-domain and a self-codebook for the full rating dataset

104 Transferring the captured knowledge to the full domain dataset, based on the extracted codebooks from the previous step

# Fig. 1

201

202

203

## Fig. 2(a)

| | L1 | L2 | L3 |
|---|---|---|---|
| K1 | 0.87 | 0.2 | 0.1 |
| K2 | 0.3 | 0.77 | 0.4 |

## Fig. 2(b)

| | L1 | L2 | L3 | L4 | ... |
|---|---|---|---|---|---|
| K1 | 3 | 2.1 | 2 | 3 | ... |
| K2 | 3 | 2.1 | 5 | 2 | ... |
| K3 | 3 | 2.9 | 3.3 | 4 | ... |
| K4 | 5 | 4 | 4.1 | 2 | ... |
| ... | ... | ... | ... | ... | ... |

## Fig. 2(c)

| | L1 | L2 | L3 | L4 | ... |
|---|---|---|---|---|---|
| K1 | 5 | 2 | 2.6 | 5 | ... |
| K2 | 4.1 | 2.5 | 4 | 3 | ... |
| K3 | 5 | 2.8 | 3.3 | 2 | ... |
| K4 | 2 | 3 | 4 | 5 | ... |
| ... | ... | ... | ... | ... | ... |

## Fig. 2(d)

1. For iid ← 1 .. q do
2.   Set randomly $V^{(0)}_{iid}$ from $\{0, .. L\text{-}1\}$
3. For uid ← 1 ..p do
4.   Set randomly $U^{(0)}_{uid}$ from $\{0, .. K\text{-}1\}$
5. Calculate current CodeBook – $B^{(0)}$, according to eq. 3 or 4.
6. Set t =1
7. While (*!Termination Condition*) do
8.   For uid ← 1 ..p do
9.    $$U^{(t)}{}_{uid} = \arg\min{}_{j,j\in\{0...K-1\}} \sum_{iid\in ST_{uid}} (ST_{uid,iid} - B^{(t-1)}[j][V^{(t-1)}_{iid}])^2$$
10.   Calculate current CodeBook – $B^{(t)}$, according to eq. 3 or 4.
11.   For iid ← 0 .. q-1 do
12.    $$V^{(t)}{}_{iid} = \arg\min{}_{j,j\in\{0...L-1\}} \sum_{uid\in ST_{uid}} (ST_{uid,iid} - B^{(t-1)}[U^{(t)}_{uid}][j])^2$$
13.   Update the current CodeBook – $B^{(t)}$, according to eq. 3 or 4.
14.   Evaluate current model (*calculate RMSE*) on *SV* data set
15.   t = t+1.
16. Return $U^{(t)}$, $V^{(t)}$, $B^{(t)}$ with minumum RMSE on *SV*.

Fig. 3

Input: TT- target domain records used as a training set; TV- target domain records used as a validation set, B's – list of N source sub-domain codebooks.

Output: U- user cluster matrix map; V- item cluster matrix r map; alpha's – alphas vector for combining source codebooks.

1. For iid$\leftarrow$1 .. q do
2.    For n $\leftarrow$ 0 .. N-1 do
3.       Set U(0)iid,n from {0, .. Kn-1 } randomly
4.       Set V(0)iid,n from {0, .. Ln-1 } randomly
5.    For n $\leftarrow$ 0 .. N-1 do
6.       Set $\alpha$(0)n to 1/N
7.    Set t =1
8. While (!Termination Condition) do
9.    For uid$\leftarrow$1 ..p do
10.       Find optimal assignment Uuid,* minimizing:

$$\sum_{iid \in TT(uid)} (TT_{uid,iid} - \sum_{n=0}^{N-1} \alpha_n^{(t-1)} B_n [U_{uid,n}][V_{iid,n}^{(t-1)}])^2$$

11.       Set U(t)uid,* according to the returned solution
12.    For iid$\leftarrow$0 .. q-1 do
13.       Find     optimal     assignment     Viid,*     minimizing:

$$\sum_{uid \in TT(iid)} (TT_{uid,iid} - \sum_{n=0}^{N-1} \alpha_n^{(t-1)} B_n [U_{uid,n}^{(t)}][V_{iid,n}])^2$$

14.       Set V(t)iid,* according to the returned solution
15.    Update $\alpha$0 , $\alpha$1, ... $\alpha$n-1.
16.    Evaluate current model (calculate RMSE ) on TV
17.    t = t+1.
18. Return U(t), V(t), B(t), $\alpha$ (t) with minumum RMSE on TV.

# Fig. 4

Fig. 5

Fig. 6

Europäisches
Patentamt

European
Patent Office

Office européen
des brevets

## EUROPEAN SEARCH REPORT

Application Number

EP 15 17 9606

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/096009 A1 (SCHOLZ MARTIN B [US] ET AL) 19 April 2012 (2012-04-19) * abstract; claim 1; figures 1-4 * ----- | 1-7 | INV. G06Q30/02 G06Q30/00 |
| X | Weike Pan: "Collaborative Recommendation with Auxiliary Data: A Transfer Learning View", , 9 July 2014 (2014-07-09), XP002751998, Retrieved from the Internet: URL:http://arxiv.org/pdf/1407.2919v1.pdf [retrieved on 2015-12-09] * the whole document * ----- | 1-7 | |
| X | KYUNGNAM KIM ET AL: "Background modeling and subtraction by codebook construction", IMAGE PROCESSING, 2004. ICIP '04. 2004 INTERNATIONAL CONFERENCE ON SINGAPORE 24-27 OCT. 2004, PISCATAWAY, NJ, USA,IEEE, vol. 5, 24 October 2004 (2004-10-24), pages 3061-3064, XP010786443, DOI: 10.1109/ICIP.2004.1421759 ISBN: 978-0-7803-8554-2 * abstract * ----- | 1-7 | |
| X | EP 1 944 933 A2 (BROADCOM CORP [US]) 16 July 2008 (2008-07-16) * abstract; claim 1; figures 1-4 * ----- | 1-7 | |

TECHNICAL FIELDS
SEARCHED      (IPC)

G06Q

The present search report has been drawn up for all claims

| Place of search | Date of completion of the search | Examiner |
|---|---|---|
| Munich | 9 December 2015 | Viets, Ana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 15 17 9606

This annex lists the patent family members relating to the patent documents cited in  the above-mentioned European search report.
The members are as contained in the European Patent Office EDP file on
The European Patent Office is in no way liable for these particulars which are merely given for the purpose of information.

09-12-2015

| Patent document cited in search report | Publication date | Patent family member(s) | Publication date |
|---|---|---|---|
| US 2012096009 A1 | 19-04-2012 | NONE | |
| EP 1944933 A2 | 16-07-2008 | CN 101232317 A | 30-07-2008 |
| | | EP 1944933 A2 | 16-07-2008 |
| | | HK 1122915 A1 | 22-11-2013 |
| | | KR 20080065565 A | 14-07-2008 |
| | | TW 200845665 A | 16-11-2008 |
| | | US 2008165869 A1 | 10-07-2008 |
| | | US 2011211656 A1 | 01-09-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Can Movies and Books Collaborate? Cross-domain Collaborative Filtering for Sparsity Reduction. **LI et al.** Proceedings of the 21st International Joint Conference on Artificial Intelligence. Morgan Kaufmann Publishers Inc, July 2009, 2052-2057

- TALMUD: transfer learning for multiple domains. **MORENO, O. ; SHAPIRA, B. ; ROKACH, L. ; SHANI, G.** Proceedings of the 21st ACM international conference on Information and knowledge management. ACM, October 2012, 425-434